# EUROPEAN PATENT APPLICATION

(11) **EP 2 336 491 A2**
(43) Date of publication of application: **22.06.2011**
(21) Application number: 10194287.8
(22) Date of filing: 09.12.2010
(51) Int. Cl.: F01D 1/02, F02C 3/073, F02C 3/10, F02C 7/36, F02K 3/065, F02K 3/077

(54) **Turbofan engine with power extraction system**

(30) Priority: 21.12.2009 US 288369 P; 21.12.2009 US 288372 P; 02.09.2010 US 874697; 02.09.2010 US 874711
(71) Applicant: General Electric Company, Schenectady, NY 12345 (US)
(72) Inventor: Baughman, John Lewis, Cincinnati, OH 45215 (US)
(74) Representative: Gray, Thomas

(57) **Abstract**

A power extraction system (200) is disclosed having a forward fan stage (52) configured to pressurize an airflow (1), an aft fan stage (60) having a tip-fan (70) configured to pressurize a first portion (3) of a pressurized air flow (2) from the forward fan stage (52) wherein the aft fan stage (60) is driven by a second portion (4) of the pressurized airflow (2), and a power drive system (210) adapted to supply power from the aft fan stage (60).

## Description

### BACKGROUND OF THE INVENTION

This invention relates generally to gas turbine engines, and, more specifically, to a gas turbine engine with a power extraction system having an intermediate pressure fan stage having a blade driven by a pressurized airflow.

In a turbofan aircraft gas turbine engine, air is pressurized in a fan module, an optional booster module and a compression module during operation. A portion of the air passing through the fan module is passed into a by-pass stream and used for generating a portion of the thrust needed for propelling an aircraft in flight. The air channeled through the optional booster module and compression module is mixed with fuel in a combustor and ignited, generating hot combustion gases which flow through turbine stages that extract energy therefrom for powering the fan, booster and compressor rotors. The fan, booster and compressor modules have a series of rotor stages and stator stages. The fan and booster rotors are typically driven by a low-pressure turbine (LPT) and the compressor rotor is driven by a high-pressure turbine (HPT). The fan and booster rotors are aerodynamically coupled to the compressor rotor although the fan rotor and compressor rotor normally operate at different mechanical speeds.

It is often desirable to use an engine core comprising the compressor, combustor, high-pressure turbine (HPT) and low-pressure turbine (LPT) from a high bypass commercial engine or a medium bypass engine with a moderate fan pressure ratio as a building block for lower bypass ratio engines with higher fan pressure ratios. The boost pressure and temperature into the high-pressure compressor (HPC) is usually significantly higher in the low-bypass derivative engine than in the original high-bypass engine. This typically requires that the maximum operating airflow in the core be limited below its full design corrected airflow capacity due to mechanical limitations of the maximum physical core speed and/or the maximum compressor discharge temperature capability of the core. It is desirable to find a way to operate the original engine core airflow at its full potential while significantly increasing the fan pressure ratio to the bypass stream to maximize the thrust potential of the derivative engine.

Conventional military and commercial aircraft gas turbine engines provide for external power extraction from the high-pressure spool by means of an offtake through a tower shaft and accessory gearbox. Typical external power requirements for conventional aircraft gas turbine engines are under 200 horse-power (hp) with peak transient loads on the order of 500 hp. External power requirements of one or more megawatts (MW) would usually be met in conventional aircraft gas turbine engines by using a separate power plant or auxiliary power unit (APU). For very large power loads, some conventional marine and industrial gas turbine engines add additional turbine stages to the gas generator and drive the load from the gas generator spool. Other conventional gas turbine engines add a separate power turbine behind the gas generator to drive the external load.

Modem aircraft and their missions are requiring significantly higher external power to be supplied by the main propulsion system than conventional gas turbine engines can provide using conventional methods. Electrical power in the range of 1 to 5 MW for external applications may be needed in some modem aircrafts. In some cases, such high power loads may require major compromises in the propulsion engine design in order to support them while maintaining engine operability. Some aircraft and mission applications require very rapid response to large changes in the external load demand, which are difficult to accommodate with conventional power offtake configurations due to the inertias of the engine rotors and the spool speed changes needed to provide the additional power. Certain external systems that demand the high power require or prefer to minimize the speed excursions in the power supply from the propulsion system. Conventional low-pressure spools may have large speed changes in the fan speed with changes in the engine throttle setting. Conventional high-pressure spools may have a larger than desired speed change when the external power demand from them is suddenly changed. Therefore, high power extraction for external use from the low-pressure spool or the high-pressure spool may not be desirable in some cases.

Accordingly, it would be desirable to have a gas turbine engine having a power extraction system that can provide a high power offtake capability with a rapid response to large changes in load demands.

### BRIEF DESCRIPTION OF THE INVENTION

The above-mentioned need or needs may be met by exemplary embodiments which provide a power extraction system having a forward fan stage configured to pressurize an airflow, an aft fan stage having a tip-fan configured to pressurize a first portion of a pressurized air flow from the forward fan stage wherein the aft fan stage is driven by a second portion of the pressurized airflow, and a power drive system adapted to supply power from the aft fan stage.

In one aspect of the invention, the aft fan stage rotates independently from the forward fan stage.

In another aspect of the invention, the aft fan stage has an air turbine blade comprising a turbine airfoil adapted to extract energy from a pressurized flow of air and a tip-fan blade adapted to pressurize a flow of air.

In another aspect of the invention, the power extraction system comprises a power drive system having a shaft driven by the aft fan stage.

In an exemplary embodiment, the power extraction system comprises an electric generator driven by aft fan stage.

### BRIEF DESCRIPTION OF THE DRAWINGS

The subject matter which is regarded as the invention is particularly pointed out and distinctly claimed in the concluding part of the specification. The invention, however, may be best understood by reference to the following description taken in conjunction with the accompanying drawing figures in which:
Figure 1 is a schematic cross-sectional view of a portion of a gas turbine engine with an exemplary embodiment of a power extraction system according to the present invention.
Figure 2 is a schematic cross-sectional view of an exemplary gas turbine engine according to the present invention having an exemplary embodiment of a power extraction system from an intermediate fan stage.

### DETAILED DESCRIPTION OF THE INVENTION

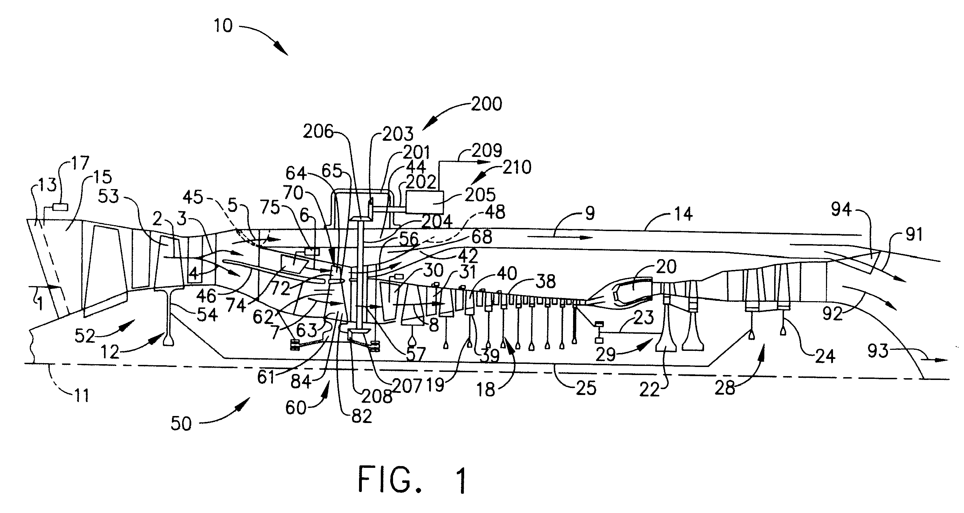

Referring to the drawings wherein identical reference numerals denote the same elements throughout the various views, FIG. 1 shows an exemplary turbofan gas turbine engine 10 incorporating an exemplary embodiment of the present invention. The exemplary gas turbine engine 10 comprises an engine centerline axis 11, a fan 12 which receives an inflow of ambient air 1, an optional booster or low-pressure compressor (LPC) (not shown in FIG. 1), a high-pressure compressor (HPC) 18, a combustor 20 which mixes fuel with the air pressurized by the HPC 18 for generating combustion gases which flow downstream through a high-pressure turbine (HPT) 22, and a low-pressure turbine (LPT) 24 from which the combustion gases are discharged from the engine 10. The HPT 22 is coupled to the HPC 18 using a HPT shaft 23 to substantially form a high-pressure rotor 29. A low-pressure shaft 25 joins the LPT 24 to the fan 12 (and the optional booster if present) to substantially form a low-pressure rotor 28. The second or low-pressure shaft 25 is rotatably disposed co-axially with and radially inwardly of the high-pressure rotor 29. The low-pressure rotor 28 and the high-pressure rotor 29 are aerodynamically coupled but rotate independently since they are not mechanically coupled.

The HPC 18 that pressurizes the air flowing through the core has a rotor 19 that rotates about the longitudinal centerline axis 11. The HPC system includes a plurality of inlet guide vanes (IGV) 30 and a plurality of stator vanes 31 arranged in a circumferential direction around the longitudinal centerline axis 11. The HPC 18 further includes multiple rotor stages 19 which have corresponding rotor blades 40 extending radially outwardly from a rotor hub 39 or corresponding rotors in the form of separate disks, or integral blisks, or annular drums in any conventional manner. The high-pressure rotor 29 is supported in the engine static frames using known support methods using suitable bearings.

Cooperating with each rotor stage 19 is a corresponding stator stage comprising a plurality of circumferentially spaced apart stator vanes 31. An exemplary arrangement of stator vanes and rotor blades for an axial flow high-pressure compressor 18 is shown in FIG. 1. The rotor blades 40 and stator vanes 31 define airfoils having corresponding aerodynamic profiles or contours for pressurizing a core airflow 8 successively in axial stages. The rotor blades 40 rotate within an annular casing 38 that surrounds the rotor blade tips. In operation, pressure of the core air flow 8 is increased as the air decelerates and diffuses through the stator and rotor airfoils.

FIG. 1 shows a fan system 50 comprising a forward fan stage 52 that pressurizes an airflow 1. The pressurized airflow 2 exits axially aft from the forward fan stage 52. A static annular splitter 46 that is coaxial with the centerline axis 11 is located axially aft from the forward fan stage 52. The annular splitter 46 divides the pressurized airflow 2 into a first portion 3 and a second portion 4, as shown in FIG. 1.

The fan system 50 has an aft fan stage 60 (alternatively referred to herein as an intermediate pressure fan stage or IPFS) that is located axially aft from the annular splitter 46. The aft fan stage 60 comprises an aft fan rotor 61 and has a circumferential row of aft fan blades 62. The aft fan stage 60 rotates about the centerline axis 11 but it is not mechanically coupled with the high-pressure compressor 18 or the forward fan stage 52. Although the aft fan stage 60 is aerodynamically coupled during operation of the engine 10 to the forward fan stage 52 and the forward stages of the high-pressure compressor 18, the aft fan stage 60 rotates mechanically independently from the low-pressure rotor 28 and the high-pressure rotor 29. Thus, the aft fan stage 60 rotates independently from the forward fan stage 52 that is located upstream from it.

As shown in FIG. 1, the aft fan stage 60 comprises a row of aft fan blades 62 arranged circumferentially around the longitudinal axis 11. Each aft fan blade 62 has a radially inner portion 63 and an outer portion 64. The radially inner portion 63 of the aft fan blade 62 is configured to be driven as an air-turbine blade 82 that can extract energy from a pressurized airflow 7 that enters the inner portion 63. Known air-turbine airfoil shapes can be used in the construction of the inner portion 63 aft fan blade 62. As the airflows over the inner portion 63, it expands to form an outflow 57 of air that has a lower pressure and lower temperature and imparts energy to the aft fan blades 62 to drive the aft fan stage 60.

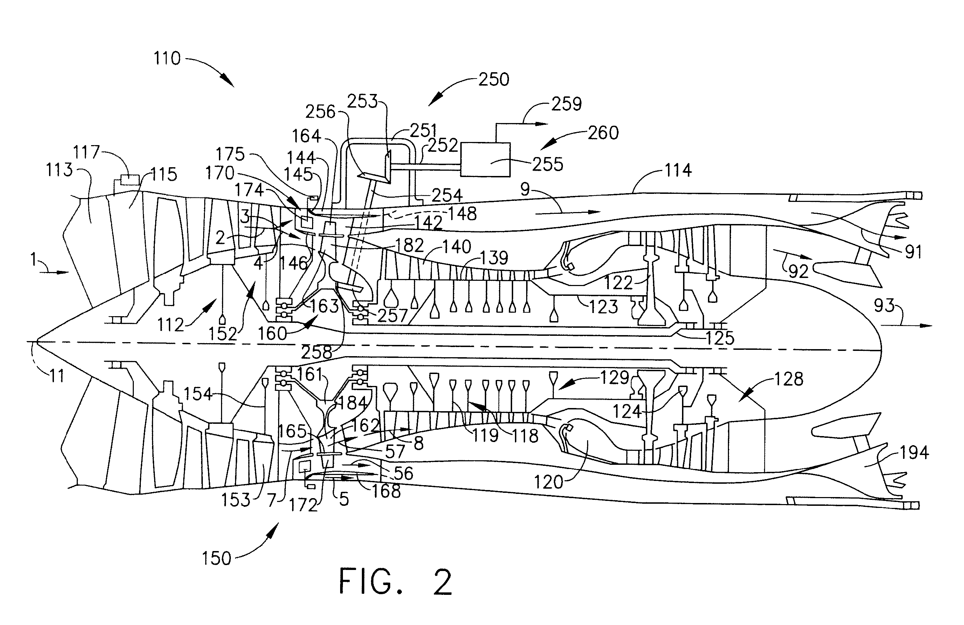

As shown in FIG. 1, each aft fan blade 62 has an outer portion 64 and an arcuate shroud 65 between the inner portion 63 and the outer portion 64. The outer portion 64 of the aft fan blade 62 is configured to be a tip-fan blade 72 that can pressurize an inflow of air 6. The arcuate shroud 65 supports the tip-fan blade 72. The outer portion 64 of the aft fan blade 62 has known airfoil shapes for fan blades that can pressurize an inflow of air 6. In the assembled state of the aft fan stage 60, the arcuate shroud 65 of each blade 62 abuts the arcuate shrouds of the circumferentially adjacent fan blades 62 to form an annular platform and a tip-fan 70 comprising the tip-fan blades 72. In one embodiment, each aft fan blade 62 has one tip-fan blade 72 supported by the arcuate shroud 65. In alternative embodiments, each aft fan blade 62 may have a plurality of tip-fan blades 72 supported by the arcuate shroud 65 (item 165 in FIG. 2).

As shown in FIG. 1, the aft fan stage 60 has a tip-fan 70 configured to pressurize a first portion 3 of a pressurized air flow 2 from the forward fan stage 52. The tip-fan 70 is driven by the aft blade inner portion 63 that acts as an air turbine blade 82. The aft fan stage 60, with the tip-fan 70, is driven by a second portion 4 of the pressurized airflow 2. The inner portion 63 of the aft fan blade 62 is configured to work as an air-turbine blade that can extract energy from a pressurized air stream whereas the outer portion 64 of the aft fan blade 62 is configured to be a compression-type airfoil that can pressurize an airflow. The inner portion 63 is an air turbine blade 82 having a turbine-type airfoil 84 adapted to extract energy from a pressurized flow of air. The outer portion 64 of the aft fan blade 62 is alternatively referred to herein as a tip-fan blade 72. The tip-fan blade 72 is capable of pressuring a flow of air 6 to create a pressurized tip flow 56 (see FIG. 1).

As shown in FIG. 1, the fan system 50 further comprises a circumferential row of inlet guide vanes (IGV) 74 that are located axially forward from the tip-fan 70 of the aft fan stage 60. The IGVs 74 have known airfoil shapes that can re-orient an incoming airflow 3 to be an airflow 6 that suitably enters the tip-fan 70 for further pressurization. The IGVs 74 are suitably supported by an inner casing 68 (see FIG. 1) and/or by the splitter 46. For enhanced control of the operation of the aft fan stage 60, the fan system 50 may have inlet guide vanes 74 that have variable vanes configured to modulate a flow of air 6 to the tip-fan 70. The amount and orientation of the airflow 6 that is directed to the tip-fan 70 can be varied by suitably moving a portion of the IGVs 74 to vary the stagger angles using known actuators 75.

As described herein, the intermediate pressure fan stage (IPFS) 60,160 (see FIGS. 1 and 2) is a separate spool, mechanically independent from the low-pressure spool comprising the low-pressure turbine 24 and from the high-pressure spool comprising the high-pressure turbine 22. The IPFS 60, 160 incorporates a tip-fan 70, 170 for its radially outer flowpath and an air-driven turbine stage in the radially inner flowpath. The IPFS spool is located between the forward fan stage 52 and the HPC 18. A part of the air 2 from the forward fan stage 52 is delivered to the tip of the IPFS where its pressure is increased by the IPFS and then delivered to a bypass passage 42 (see FIG. 1). The inner portion 4 of the forward fan stage 52 flow is delivered to the air turbine blades 82, 182 of the air-driven turbine stage in the inner portion of the IPFS 60, 160 where it is expanded to provide the power to drive the tip-fan 70, 170 and an external load, such as, for example, a generator 205, 255. A variable IGV 74, 174 is provided that can be modulated to control the IPFS spool speed under changing external load demand conditions.

FIG. 1 shows an exemplary embodiment of a power extraction system 200 comprising an aft fan stage 60 coupled to a power drive system 210 that is adapted to supply power from the aft fan stage 60. The power drive system 210 comprises a shaft 204 having gears 206, 207 as shown. In the exemplary embodiment shown in FIG. 1, the aft fan stage 60 has a gear 208 that rotates with the aft fan rotor 61 and engages with the gear on the shaft 204, thereby driving the shaft 204. The gear 206 located on the other end of the shaft 204 engages with other gears 203 in a gear box 201 and drives a power output shaft 202. In the exemplary embodiment shown in FIGS. 1 and 2, the power output shaft 202 drives an electric generator 205 that supplies electrical power output 209 to drive external loads. Those skilled in the art will recognize that other suitable methods of utilizing the power from the output shaft 202, such as, for example, using hydraulic pumps, may be utilized.

During operation of the engine 10, at high power extraction the IPFS tip-fan 70 flow 6 (see FIG. 1) is reduced by closing the IGV 74 to minimize the load on the air-turbine blades 82 from the IPFS tip-fan 70. This causes a larger portion of the power from the aft fan stage 60 to be delivered to the external load, such as, for example, generator 205. When the external power demand is lower, the tip-fan IGV 74 is opened to increase the tip-fan 70 flow load (due to additional pressurization of the flow 6) and maintain a substantially constant total load on the IPFS hub air-turbine, and maintaining a substantially constant rotational speed for the IPFS rotor 61.

A rear variable area bypass injector (VABI) 94 may also be used to modulate the operating line of the IPFS tip-fan 70 and control the pressure balance between the main forward fan 52 discharge 5 and IPFS tip-fan 70 pressurized discharge 56. Conventional VABIs known in the art may be utilized for this purpose. Additional control of the IPFS spool speed and control of the main fan system 50 operating line is provided through use of the forward bypass blocker door 45 and a forward mixer or VABI 48. Conventional mixers or VABIs known in the art may be utilized for this purpose. Analytical cycle studies using known methods have shown the capability of the gas turbine engine system 10 to provide a large range of external power at a given engine throttle setting with minimal impact on thrust while maintaining the IPFS spool speed substantially constant. The magnitude and range of power extraction capability varies with engine throttle setting. Use of a rear VABI 94 permits enhanced control over the IPFS spool and the fan system 50 operating line. Conventional VABIs known in the art may be utilized for this purpose.

FIG. 2 shows an exemplary embodiment of a gas turbine engine 110 comprising a multistage fan 112 having multiple forward fan stages 152 configured to pressurize an airflow 1. Although three forward fan stages 152 are shown in the exemplary engine 110 shown in FIG. 2, any suitable number of forward fan stages for a particular application can be selected. The forward fan stages pressurize the flow stream 1 entering the fan to generate a pressurized flow stream 2. The forward fan stages are driven by a low-pressure rotor 128 comprising a low-pressure turbine 124 and a low-pressure turbine shaft 125. The gas turbine engine 110 further comprises a compressor 118 driven by a high-pressure rotor 129 having a high-pressure turbine 112 and a high-pressure shaft 123. The HPC 118 has a rotor 19 that rotates about the longitudinal centerline axis 11 and pressurizes the air 8 flowing through the core. The HPC system includes a plurality of stator vanes arranged in a circumferential direction around the longitudinal centerline axis 11 (see FIG. 1 for example). The HPC 118 further includes multiple rotor stages 119 which have corresponding rotor blades 140 extending radially outwardly from a rotor hub 139 or corresponding rotors in the form of separate disks, or integral blisks, or annular drums in any conventional manner. The high-pressure rotor 129 is supported in the engine static frames using known support methods using suitable bearings. The high-pressure turbine 122 and low-pressure turbine 124 are driven by combustion gases generated in the combustor 120 that exit as a hot exhaust stream 92.

The exemplary embodiment of a gas turbine engine 110 comprises an annular splitter 146 (see FIG. 2) located axially aft from the axially last forward fan stage 152. The splitter 146 is adapted to bifurcate the pressurized flow stream 2 from the forward fan stage 152 to form the first portion 3 and the second portion 4 of the pressurized flow 2.

The exemplary embodiment of a gas turbine engine 110 comprises an aft fan stage 160 located axially aft from the splitter 146, and axially forward from the compressor 118, as shown in FIG. 2. As shown in FIG. 2, the aft fan stage 160 has a tip-fan 170 configured to pressurize a first portion 3 of a pressurized air flow 2 from the forward fan stage 152. The tip-fan 170 is driven by the aft blade inner portion 163 that acts as an air turbine blade 182. The aft fan stage 160, with the tip-fan 170, is driven by a second portion 4 of the pressurized airflow 2. The inner portion 163 of the aft fan blade 162 is configured to work as an air-turbine blade that can extract energy from a pressurized air stream whereas the outer portion 164 of the aft fan blade 162 is configured to be a compression-type airfoil that can pressurize an airflow. The inner portion 163 is an air turbine blade 182 having a turbine airfoil 184 adapted to extract energy from a pressurized flow of air. The outer portion of the aft fan blade 162 is alternatively referred to herein as a tip-fan blade 172. The tip-fan blade 172 is capable of pressuring a flow of air 6 to create a pressurized tip flow 56 (see FIG. 1 for example). The aft fan stage 160 reduces the pressure and temperature of the pressurized airflow that drives the aft fan stage 160. Known air-turbine airfoil shapes, materials and manufacturing methods can be used in the construction of the inner portion 163 aft fan blade 162. As the air flows over the inner portion 163, it expands to form an outflow 57 of air that has a lower pressure and lower temperature and imparts energy to the aft fan blades 162 to drive the aft fan stage 160.

The exemplary gas turbine engine 110 shown in FIG. 2 further comprises a circumferential row of inlet guide vanes (IGVs) 174 located axially forward from the tip-fan blades 172. Known airfoil shapes, materials and manufacturing methods can be used in constructing the IGVs 174. The IGVs 174 control the volume of flow of air into the tip-fan 170, similar to the arrangement shown in FIG. 1. For enhanced control of the flow of air into the tip-fan 170, the inlet guide vanes 174 are variable vanes that are configured to modulate the flow of air to the tip-fan 70. The amount and orientation of the airflow that is directed to the tip-fan 710 can be varied by varying the stagger angles by suitably moving a portion of the IGVs 174 using known actuators 175.

In one aspect of the present invention, the exemplary gas turbine engine 110 shown in FIG. 2 (and FIG. 1) further comprises an annular inner bypass passage 142 adapted to flow an inner bypass flow 56 and an annular outer bypass passage 144 adapted to flow an outer bypass flow 5. The outer bypass flow 5 passes through the outer bypass passage 144 and is not pressurized by the tip-fan 170. The inner bypass flow 6 (see FIG. 1) is pressurized by the tip-fan 170 and exits as pressurized tip flow 56. A forward mixer 148 located downstream from the aft fan stage 160 is provided to enhance mixing of the higher pressure inner bypass flow 56 and the lower pressure outer bypass flow 5 to form a mixed bypass flow 9 and developing a static pressure balance. Known mixers (alternatively known as Variable Area Bypass Injectors, or VABI, in the art) can be used for the mixer 148. A reverse flow in the outer bypass passage 144 can be prevented by using a known blocker door 145 that is located near the forward area of the outer bypass passage 144. During operation of the engine, the blocker door is operated toward closure when the variable IGV 144 is opened to cause further pressurization by the tip-fan 170. The gas turbine engine 110 further comprises a rear mixer 94 (alternatively known as Variable Area Bypass Injectors, or VABI, in the art) located down-stream from the low-pressure turbine 24 that is adapted to enhance mixing of the hot exhaust 92 from the low-pressure turbine 24 and the relatively cooler bypass air flow stream 91. Known mixers (VABIs) can be used for this purpose. During engine operation, the operability of the forward fan stage 152 and the aft fan stage 160 can be controlled as necessary by suitably scheduling, using known methods, the operation of the variable IGVs 144, blocker door 145, forward mixer 148 and the rear VABI 194.

As shown in FIGS. 1 and 2, the aft fan stage 60, 160 (alternatively referred to herein as an intermediate pressure fan stage or IPFS) is a separate, independently rotating, spool that incorporates a tip-fan 70, 170 unlike the core driven fan stages that are coupled to the core spools known in the art. Further, as described herein, the IPFS has a tip-fan blade 72, 172 in its outer portion and a air turbine blade 82, 182 in the inner portion. The IPFS spool is located between the forward fan 52, 152 and the HPC 18, 118 such that part of the fan air is delivered to the tip of the IPFS where its pressure is further increased by the IPFS tip-fan blade 72, 172 and then delivered to the inner bypass passage 42, 142. The inner portion 4 of the forward fan flow 2 is delivered to the turbine blade 82, 182 in the inner portion of the IPFS where it is expanded to provide the power to drive the fan tip. The flow from the exit of the turbine is delivered to the entrance of the HPC 18, 118. The extraction of energy by the IPFS turbine blade 82, 182 reduces the boost pressure and temperature into the HPC 18, 118 below those at the forward fan exit 52, 152. By judicious choice of forward fan 52, 152 and IPFS tip-fan 70, 170 pressure ratios, the inlet conditions to the high pressure compressor 18, 118 can be matched to the originating (baseline) engine design conditions and maximize the use of the core flow capability by the derivative engine. At the same time the forward fan 52, 152 and IPFS 60, 160 provide the desired higher bypass air pressure for the bypass flow 9.

Cycle studies have shown that the thrust potential for an existing core can be increased up to 20% over a mixed flow turbofan derivative at the same fan airflow size. Temperature levels into the HPC can readily be matched to the original hardware design conditions allowing maximum use of the corrected flow capability within the original core mechanical design limits. Those skilled in the art will recognize that flowpath architecture studies using known methods can be performed to establish the required mounting structure for the IPFS and the aerodynamic design properties of the fan tip and turbine hub. In the exemplary embodiment shown in FIG. 2, the IPFS is preferably mounted within the fan frame structure, thus requiring no additional main engine frames to mount the additional spool.

FIG. 2 shows an exemplary gas turbine engine having a power extraction system 250 comprising an aft fan stage 160 coupled to a power drive system 260 that is adapted to supply power from the aft fan stage 160. The power drive system 260 comprises a shaft 254 having gears 256, 257 as shown. In the exemplary embodiment shown in FIG. 2, the aft fan stage 160 has a gear 258 that rotates with the aft fan rotor 161 and engages with the gear on the shaft 254, thereby driving the shaft 254. The gear 256 located on the other end of the shaft 254 engages with other gears 253 in a gear box 251 and drives a power output shaft 252. In the exemplary embodiment shown in FIG. 2, the power output shaft 252 drives an electric generator 255 that supplies electrical power output 259 to drive external loads. Those skilled in the art will recognize that other suitable methods of utilizing the power from the output shaft 252, such as, for example, using hydraulic pumps, may be utilized.

During operation of the engine 110, at high power extraction the IPFS tip-fan 170 flow 6 (see FIG. 2) is reduced by closing the IGV 174 to minimize the load on the air-turbine blades 182 from the IPFS tip-fan 170. This causes a larger portion of the power from the aft fan stage 160 to be delivered to the external load, such as, for example, generator 255. When the external power demand is lower, the tip-fan IGV 174 is opened to increase the tip-fan 170 flow load (due to additional pressurization of the flow 6) and maintain a substantially constant total load on the IPFS hub air-turbine, and maintaining a substantially constant rotational speed for the IPFS rotor 161.

A rear variable area bypass injector (VABI) 194 may also be used to modulate the operating line of the IPFS tip-fan 170 and control the pressure balance between the main forward fan 152 discharge 5 and IPFS tip-fan 170 pressurized discharge 56. Conventional VABIs known in the art may be utilized for this purpose. Additional control of the IPFS spool speed and control of the main fan system 150 operating line is provided through use of the forward bypass blocker door 145 and a forward mixer or VABI 148. Conventional mixers or VABIs known in the art may be utilized for this purpose. Analytical cycle studies using known methods have shown the capability of the gas turbine engine system 110 to provide a large range of external power at a given engine throttle setting with minimal impact on thrust while maintaining the IPFS spool speed substantially constant. The magnitude and range of power extraction capability varies with engine throttle setting. Use of a rear VABI 194 permits enhanced control over the IPFS spool and the fan system 150 operating line. Conventional VABIs known in the art may be utilized for this purpose.

Referring to FIGS. 1 and 2, an exemplary method of extracting power from a gas turbine engine 10, 110 comprises the following steps. An airflow 1 that is flowing into a fan system 50, 150 is pressurized in a forward fan stage 52, 152 to generate a pressurized flow 2 that exits from the forward fan stage. The pressurized flow 2 is bifurcated to a first portion 3 and a second portion 4 using a suitable means, such as for example, using an annular splitter 46, 146. The first portion 3 of the pressurized airflow 2 is then directed towards a tip-fan 70 of an aft fan stage 60. A portion of the pressurized flow 2 is flown through an outer bypass passage 44, 144 creating an outer bypass flow 5. The aft fan stage 60 rotates independently from the forward fan stage 52. The second portion 4 of the pressurized airflow 2 is directed towards a circumferential row of air-turbine blades 82 of the aft fan stage 60 such that the aft fan stage 60 is driven by the pressurized air. At this time, a higher pressure inflow 7 entering the inner portion 63, 163 of aft fan stage 60 is expanded to a lower pressure outflow 57. During this expansion, the temperature of the expanding air flow in the inner portion 63, 163 of the aft stage 60, 160 drops. Thus, the temperature and pressure of a core flow 8 entering a compressor 18, 118 is reduced.

The exemplary method of extracting power comprises the step of extracting a portion of the power generated by the aft fan stage 60, 160 to drive an external load 205. A power drive system 210, 260 is used as shown in FIGS. 1 and 2 for driving the external load 205 using the aft fan stage 60, 160. The exemplary method described herein comprises the step of driving a power-takeoff shaft 204, 254 using the aft fan stage 60, 160. In some applications, the method further comprises the step of driving a power output shaft 202 that is coupled to an external load. As shown, for example, in FIGS. 1 and 2, driving of the power output shaft 202 is done using a set of gears 203, 206 in a gear box 201, 251. In one exemplary embodiment of the method, the external load 205, 255 comprises an electric generator that supplies a power output 209, 259. In other exemplary embodiments, the external load may include hydraulic pumps or other suitable methods of utilizing the power extracted from the aft fan stage 60, 160.

The exemplary method further comprises the step of pressurizing a flow 6 entering the tip-fan 70, 170 to generate a pressurized tip flow 56 (See FIGS. 1 and 2). The flow of air 6 entering the tip-fan 70 is modulated with an inlet guide vane 74, 174. Specifically, the amount of air flowing through the tip-fan 70, 170 is independently controlled by the inlet guide vanes 74, 174. More specifically, a stagger of the inlet guide vanes 74, 174 is varied to selectively control the quantity of airflow through the tip-fan 70, 170, based on the fan pressure ratio, thrust and performance requirements of the engine 10, 110 and the demands for external power. The modulating of air 6 between substantially zero air flow and a maximum discharge air flow is performed as required by varying a stagger of the inlet guide vanes 74, 174. For example, during high external power demand conditions (see items 209, 259) the inlet guide vanes 74, 174 are substantially closed to limit the amount of air flow into the tip-fan 70, 170 and opening the blocker door 45, 145. During low power demand conditions, the inlet guide vanes 74, 174 are opened to permit more air flow into the tip-fan 70, 170 and use the power from the aft fan rotor 61, 161 to pressurize the tip-fan flow 6 and generate pressurized flow 56. By the use of the IGVs 74, 174 as described above, the aft fan stage 60, 160 can be operated at substantially a constant rotational speed. Those skilled in the art will recognize that this is especially advantageous while driving electrical generators. Further, unlike conventional power extraction methods using high-pressure spools and low-pressure spools or core-driven fans that have high inertia, the use of the independently rotating aft fan stage 60, 160 have relatively low inertia and has a faster response to rapidly changing external power demands 209, 259. In the exemplary embodiment, the inlet guide vanes 74, 174 are mechanically actuated by known actuators 75, 175 and operated by a known main engine control system (not shown). In alternative embodiments, the inlet guide vanes 74, 174 are operated by any suitable mechanism. Further, the exemplary method comprises the step of mixing the outer bypass flow 5 in an annular outer bypass passage 44,144 with a tip-flow 56 from the tip-fan 70, 170 in an annular inner bypass passage 42, 142 to create a mixed bypass flow 9. A blocker door 45, 145 located near the outer bypass passage 44, 144 is operated by modulating it between partially closed and substantially fully open positions so as to prevent a reverse flow in the outer bypass passage 144. Mechanical actuators operated by a known main engine control system (not shown) are used in the exemplary embodiment shown herein. The method described herein optionally comprises the step of operating a forward mixer 48, 148 of a known type to control the mixing of the outer bypass flow 5 and the tip-flow 56 and achieve a suitable static pressure balance. Further, the method comprises operating a rear mixer 94, 194 of a known type to control the operating characteristics of the forward fan stage 152 and the aft fan stage 160 and engine 10, 110 performance. The forward mixer 48, 148, rear mixer 94, 194, the blocker door 45, 145 and the inlet guide vanes 74, 174 are operated in a controlled manner using an engine control system (not shown) in order to optimize the operating characteristics and performance of the engine 10,110, as well as external power demands 209, 259.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A power extraction system comprising:
   a forward fan stage configured to pressurize an airflow;
   an aft fan stage located axially aft from the forward fan stage, the aft fan stage having a tip-fan configured to pressurize a first portion of a pressurized air flow from the forward fan stage wherein the aft fan stage is driven by a second portion of the pressurized airflow; and
   a power drive system adapted to supply power from the aft fan stage.
2. A power extraction system according to clause 1 wherein the aft fan stage rotates independently from the forward fan stage.
3. A power extraction system according to clause 1 wherein the power drive system comprises a shaft driven by the aft fan stage.
4. A power extraction system according to clause 3 wherein the shaft is adapted to drive a power output shaft.
5. A power extraction system according to clause 4 further comprising a gear box having a set of gears adapted to drive the power output shaft.
6. A power extraction system according to clause 1 wherein the power extraction means comprises an electric generator driven by the aft fan stage.
7. A power extraction system according to clause 1 wherein the aft fan stage comprises a circumferential row of aft fan blades, each aft fan blade having an inner portion configured to be driven as an air-turbine blade.
8. A power extraction system according to clause 7 wherein the aft fan blade has an outer portion having a tip-fan blade capable of pressurizing a flow of air.
9. A power extraction system according to clause 7 wherein the aft fan blade has an arcuate shroud that supports a tip-fan blade.
10. A power extraction system according to clause 7 wherein the aft fan blade has an arcuate shroud that supports a plurality of tip-fan blades.
11. A power extraction system according to clause 1 further comprising a circumferential row of inlet guide vanes located axially forward from the tip-fan.
12. A power extraction system according to claim 11 wherein the inlet guide vanes are variable vanes configured to modulate a flow of air to the tip-fan.
13. A gas turbine engine comprising:
   a forward fan stage configured to pressurize an airflow;
   a compressor; and
   a power extraction system adapted to supply power from an aft fan stage located axially aft from the forward fan stage, and axially forward from the compressor, the aft fan stage having a circumferential row of tip-fan blades adapted to pressurize a first portion of a pressurized air flow from the forward fan stage wherein the aft fan stage is driven by a second portion of the pressurized airflow.
14. A fan system according to clause 13 wherein the aft fan stage rotates independently from the forward fan stage.
15. A gas turbine engine according to clause 13 further comprising a circumferential row of inlet guide vanes located axially forward from the tip-fan blades.
16. A gas turbine engine according to clause 15 wherein the inlet guide vanes are variable vanes configured to modulate the flow of air to the tip-fan.
17. A gas turbine engine according to clause 13 further comprising an annular inner bypass passage adapted to flow an inner bypass flow and an annular outer bypass passage adapted to flow an outer bypass flow.
18. A gas turbine engine according to clause 17 further comprising a blocker door that is adapted to prevent a reverse flow in the outer bypass passage.
19. A gas turbine engine according to clause 13 further comprising a rear mixer located down-stream from the low-pressure turbine that is adapted to enhance mixing of a hot exhaust from the low-pressure turbine and a relatively cooler flow.
20. A gas turbine engine according to clause 13 wherein power extraction system comprises a power drive system having a shaft driven by the aft fan stage.
21. A gas turbine engine according to clause 20 wherein the power drive system further comprises a gear box having a set of gears adapted to drive a power output shaft.
22. A gas turbine engine according to clause 13 wherein the power extraction system comprises an electric generator driven by the aft fan stage.

## Claims

1. A power extraction system (200) comprising:
a forward fan stage (52) configured to pressurize an airflow 1;
an aft fan stage (60) located axially aft from the forward fan stage (52), the aft fan stage (60) having a tip-fan (70) configured to pressurize a first portion (3) of a pressurized air flow (2) from the forward fan stage (52) wherein the aft fan stage (60) is driven by a second portion (4) of the pressurized airflow (2); and
a power drive system (210) adapted to supply power from the aft fan stage (60).

2. A power extraction system according to claim 1, wherein the aft fan stage (60) rotates independently from the forward fan stage (52).

3. A power extraction system according to claim 1, wherein the power drive system (210) comprises a shaft (204) driven by the aft fan stage (60).

4. A power extraction system according to claim 3, wherein the shaft (204) is adapted to drive a power output shaft (202).

5. A power extraction system according to claim 4, further comprising a gear box (201) having a set of gears (203, 206) adapted to drive the power output shaft (202).

6. A power extraction system according to any of the preceding claims, wherein the power extraction means (210) comprises an electric generator driven by the aft fan stage (60).

7. A power extraction system according to any of the preceding claims, wherein the aft fan stage (60) comprises a circumferential row of aft fan blades (62), each aft fan blade (62) having an inner portion (63) configured to be driven as an air-turbine blade (82).

8. A gas turbine engine (110) comprising:
a forward fan stage (152) configured to pressurize an airflow (1);
a compressor (118); and
a power extraction system (250) adapted to supply power from an aft fan stage (160) located axially aft from the forward fan stage (152), and axially forward from the compressor (118), the aft fan stage (160) having a circumferential row of tip-fan blades (172) adapted to pressurize a first portion (3) of a pressurized air flow (2) from the forward fan stage (152) wherein the aft fan stage (160) is driven by a second portion (4) of the pressurized airflow (2).

9. A fan system according to claim 8, wherein the aft fan stage (60) rotates independently from the forward fan stage (52).

10. A method of operating a gas turbine engine (110) comprising the steps of:
pressurizing an airflow (1) using a forward fan stage (152) to generate a pressurized flow (6);
directing a first portion (3) of the pressurized airflow (2) towards a tip-fan (70) of an aft fan stage (160);
driving the aft fan stage (160) by expanding a second portion (4) of the pressurized airflow (2) in a circumferential row of air-turbine blades (82) of the aft fan stage (160); and
extracting a portion of the power generated by the aft fan stage (160) to drive an external load (205).

11. A method according to claim 10, wherein the aft fan stage (60) rotates independently from the forward fan stage (52).

12. A method according to claim 10, further comprising the step of modulating a flow of air (6) entering the tip-fan (70) with an inlet guide vane (174).
